# EUROPÄISCHE PATENTSCHRIFT

(11) **EP 1 469 245 B1**
(45) Veröffentlichungstag und Bekanntmachung des Hinweises auf die Patenterteilung: **27.01.2010**
(21) Anmeldenummer: 04008278.6
(22) Anmeldetag: 06.04.2004
(51) Int. Cl.: F16L 29/00

(54) **Steckkupplung**
Plug-in coupling
Raccord enfichable

(30) Priorität: 16.04.2003 DE 10317445
(43) Veröffentlichungstag der Anmeldung: 20.10.2004
(73) Patentinhaber: CNH Österreich GmbH, 4300 St. Valentin (AT)
(72) Erfinder: Leitner, Rupert, 3353 Seitenstetten (AT)
(74) Vertreter: Feldkamp, Rainer

(56) Entgegenhaltungen:
- DE-A1- 2 948 105
- DE-A1- 4 140 144
- DE-A1- 19 804 959
- DE-C1- 19 615 893
- GB-A- 910 429
- US-A- 5 624 073

## Beschreibung

Die Erfindung betrifft eine Steckkupplung für ein hydraulisches oder pneumatisches System, insbesondere eine Steckkupplung mit einem Nebenanschluss für ein Fahrzeug der Land- oder Kommunaltechnik oder eine Baumaschine. Derartige Steckkupplungen werden verwendet, um mehrere hydraulische Verbraucher parallel an ein hydraulisches Steuerventil anzuschließen, jedoch nicht parallel zu betreiben.

Hydraulische Steckkupplungen werden vor allem im landwirtschaftlichen Sektor und im Baumaschinensektor zum Kuppeln von hydraulisch betriebenen Zusatzgeräten, wie z. B. Frontlader, Fronthubwerke, Wendepflüge oder Hubschaufeln, an das Arbeitsgerät eingesetzt. Standardmäßig haben Arbeitsgeräte paarige Ausgänge eines Steuerventils, deren Staubschutzkappen farbig und mit einem entsprechenden Symbol gekennzeichnet sind. Jeder mit einem Vor- und Rücklauf ausgestattete Verbraucherkreis eines Zusatzgerätes kann mittels der besagten Steckkupplung an eines dieser Steuerventile angeschlossen werden.

Die am Arbeitsgerät angeordneten speisekreisseitigen Steuerventile sind üblicherweise muffenartig und die mit diesen Steuerventilen korrespondierenden verbraucherkreisseitigen Steckkupplungen als ventilartige Stecker ausgebildet. Werkseitig werden Arbeitsgeräte mit einer Anzahl von drei bis acht Steuerventilen ausgerüstet.

In der Praxis hat es sich jedoch gezeigt, dass der Bedarf an benötigten Steuerventilen temporär größer ist als die Anzahl der an der Heckseite des Arbeitsgerätes zur Verfügung stehender Steuerventile des Arbeitsgerätes.

Um dennoch weitere hydraulische Zusatzgeräte in einen speiseseitigen Hydraulikkreis einbinden zu können, wurde in der Vergangenheit die sogenannte "Abzweigerlösung" eingesetzt. Hierbei ist die Steckkupplung derart als T-Stück ausgebildet, dass diese neben dem Durchgangspfad einen weiteren abzweigenden Pfad aufweist. Die als T-Stück ausgebildete Steckkupplung weist dazu ein mit einem Innengewinde ausgebildetes Ringstück mit Abzweiger auf, das auf ein dem Innengewinde entsprechendes Außengewinde des Durchgangsteils der Steckkupplung aufgeschraubt wird.

Ein wesentlicher Nachteil dieser Lösung besteht darin, dass die an diese Steckkupplung mit Ringstück angeschlossenen parallel betriebenen hydraulischen Zusatzgeräte sich gegenseitig beeinflussen. Das liegt einerseits daran, dass gegebenenfalls diese hydraulischen Zusatzgeräte voneinander verschiedene Fluiddrücke und Fluidmengen zu ihrer gattungsmäßigen Funktionserfüllung benötigen und andererseits kein hydraulischer Abgleich an dieser als T-Stück ausgebildeter Steckkupplung realisiert wird. Dieser Umstand führt gegebenenfalls zu einer ungewollten Bewegung der an diese Steckkupplung angeschlossenen Aktoren der Zusatzgeräte. Zur Vermeidung etwaiger Gefahrensituationen ist es deshalb unabdingbar, dass nichtbenötigte Ventile vom Bedienpersonal geschlossen werden.

Es liegt daher im Verantwortungsbereich des Bedienpersonals, die Ventile nichtbenötigter Verbraucher zu schließen.

Eine weitere Möglichkeit, den Parallelbetrieb mehrerer hydraulischer Verbraucher an einem Steuerventil zu realisieren, besteht in der Verwendung einer als hydraulische Weiche ausgebildete Steckkupplung. Diese hydraulische Weiche schaltet in Abhängigkeit einer elektromagnetischen Last und gibt jeweils nur einen von zwei gesteuerten Anschlüssen in Durchströmungsrichtung frei. Standardmäßig umfasst die hydraulische Weiche Schieberventile als Absperrorgane. Ein besonderer Nachteil dieser hydraulischen Weiche besteht darin, dass auf Grund des konstruktiven Aufbaus mit Schieberventilen keine Sitzdichtheit des Drosselkörpers im komplementären Ventilsitz erzielt wird. Die Folge daraus sind hohe Leckageraten des Hydrauliköls mit Werten bis zu 50 cm³/min.

Als weitere Nachteile sind die hohen Kosten bei der Fertigung der hydraulischen Weiche und der erhebliche Montageaufwand bei der Einbindung in bestehende Hydrauliksysteme zu nennen.

Aus der DE 29 48 105 A1 ist eine Steckkupplung für ein hydraulisches System bekannt, das einen ersten und einen zweiten Anschluss aufweist, die wechselweise durch ein Verschlusselement verschließbar sind, wobei das Verschlusselement ein erstes Schließelement und ein zweites Schließelement aufweist. Die Schließelemente sind durch Aufschrauben eines weiteren Steckanschlusses so steuerbar ausgebildet, dass wechselsweise nur ein Strömungspfad für ein Fluid zu dem ersten Anschluss oder dem zweiten Anschluss freigegeben ist.

Die Aufgabe der Erfindung besteht darin, eine Steckkupplung mit einem Nebenanschluss zu entwickeln, die keine Hilfsenergie benötigt, deren Schließelemente in jeder Schaltstellung sitzdicht ausgebildet sind, die kostengünstiger zu fertigen ist und mit der darüber hinaus in einfacher Weise verbraucherkreisseitige Hydrauliksysteme mit einem speisekreisseitigen Hydrauliksystem verbunden werden können.

Die Aufgabe wird durch die Merkmale der Steckkupplung für hydraulische oder pneumatische Systeme gemäß Patentanspruch 1 gelöst.

Weitere vorteilhafte Ausgestaltungen sind in der Beschreibung und den Zeichnungen enthalten und Gegenstand der zugehörigen Unteransprüche.

Erfindungsgemäß ist vorgesehen, dass die Steckkupplung zwei gesteuerte Anschlüsse aufweist, die wechselseitig über zwei Schließelemente ohne Hilfsenergie derart gesteuert werden können, dass jeweils nur ein Strömungspfad für ein Fluid zu einem Anschluss freigegeben wird. Auf Grund einer positiven Schaltüberdeckung, d.h. die Freigabe eines zweiten Strömungspfades zu einem Anschluss erfolgt zeitversetzt erst nach einem vollständigen Verschließen des ersten Strömungspfades, wird bei einem Parallelanschluss mehrerer hydraulischer oder pneumatischer Verbraucher an diese Steckkupplung eine verbraucherkreisseitige Beeinflussung vermieden.

Da die Strömungspfade zu den Anschlüssen nur wechselseitig geöffnet werden können, kann diese Steckkupplung auch im Singlebetrieb in konventioneller Weise besonders vorteilhaft genutzt werden.

Die Steckkupplung, bestehend aus einem zylinderförmigen Gehäuse mit zwei muffenartig ausgebildeten Anschlüssen und einem Zulauf, wird bevorzugt dort eingesetzt, wo u.a. niedrige Leckageraten beim An- und Abkuppeln von hydraulischen oder pneumatischen Verbrauchern mit einem konventionellen Hydraulik- bzw. Pneumatik-Gerätestecker an ein speisekreisseitiges Steuerventil des Arbeitsgerätes gewünscht werden. Zur Erzielung dieser Sitzdichtheit sind die Schließelemente ventilartig mit einem Drosselkörper ausgebildet und greifen in die ihnen zugeordneten komplementären Verschlussöffnungen sitzdicht ein.

Das Gehäuse der Steckkupplung kann in Abhängigkeit eines gewünschten Vorfertigungsgrades ein- oder mehrteilig aufgebaut sein. Einteilige Gehäuse haben den Vorteil, dass sie in einem Verfahrenszug hergestellt werden können. Die einzelnen Bauteile der Steckkupplung, insbesondere die Schließelemente, lassen sich bei mehrteilig aufgebauten Gehäusen im Gegensatz dazu für Wartungs- oder Reparaturzwecke individuell austauschen.

Die Verbindung mehrteiliger Gehäuse erfolgt üblicherweise durch eine Verschraubung oder durch eine Flanschverbindung mit entsprechenden Dichtelementen, wie z. B. Flachdichtungen.

Das erste Schließelement verschließt einen Strömungspfad in axialer Richtung und ist mit einem Federelement lösbar verbunden. Das Schließelement weist einen Durchtritt auf und ist vorzugsweise kegelförmig ausgebildet, kann jedoch auch pyramidenstumpfförmig oder tellerförmig ausgebildet sein. Unabhängig von seiner geometrischen Form verschließt es den gesamten oder nur einen partiellen Querschnitt der Steckkupplung. In einer bevorzugten Ausgestaltungsvariante ist das Federelement als vorgespannte druckbeanspruchte Spiralfeder ausgebildet. Durch diese Spiralfeder ist eine Betätigungsstange mit einem daran angeschlossenen Betätigungskegel geführt und in dem Durchtritt des ersten Schließelements geführt. Die fluidumströmte Spiralfeder ist im vorgespannten Zustand dabei zwischen zwei fest angeordneten Anschlägen und im komprimierten Zustand durch einen festen und einen axial beweglichen Anschlag im Gehäuseinneren der Steckkupplung gehaltert. Der Vorteil des Einsatzes einer Spiralfeder liegt in der hohen Anzahl der realisierbaren Lastspiele, der kostengünstigen Fertigung derselben und in der einfachen Wirkungsweise ohne Hilfsenergie.

Das zweite Schließelement der Steckkupplung steht erfindungsgemäß in Wirkverbindung mit einem Koppelelement, das neben einer Betätigungsstange einen mit dieser lösbar verbundenen Betätigungskegel und eine zwischen einem axialen Ende des Betätigungskegels und dem Gehäuse angeordnete vorgespannte Rückstellfeder aufweist. Das Koppelelement ist in Richtung der Längsachse zwischen zwei Federendstellungen axial beweglich ausgebildet, wobei eine erste Federendstellung durch eine manuell ausgelöste Kompression der Rückstellfeder durch Ankuppeln eines Verbrauchers und eine zweite Federendstellung durch eine selbsttätige Dekompression der Rückstellfeder erzielt wird. Die axiale Beweglichkeit bzw. Führung einer Komponente des Koppelelements, der Betätigungsstange, wird durch einen zentrisch im ersten Schließelement ausgebildeten Durchtritt sichergestellt, dessen Querschnittsfläche vorteilhafterweise der der Betätigungsstange entspricht.

Mit der erfindungsgemäßen Steckkupplung lassen sich demnach zwei Schaltzustände zum wechselseitigen Verschließen bzw. Öffnen der Strömungspfade realisieren. Diese Schaltzustände ergeben sich einerseits durch Ankuppeln eines Verbrauchers an die Steckkupplung und damit durch eine manuelle Kompression des mit dem ersten Schließelement in Wirkverbindung stehenden Federelements und der mit dem zweiten Schließelement in Wirkverbindung stehenden Rückstellfeder und andererseits durch die selbsttätige Entlastung des Federelements bzw. der Rückstellfeder beim Abkuppeln des Verbrauchers von der Steckkupplung. Da diese Schaltzustände im Gegensatz zum Stand der Technik ohne Hilfsenergie eingenommen werden können, ist die Störanfälligkeit der Steckkupplung äußerst gering.

Die axiale Bewegung des Koppelelements wird beim Ankuppeln eines hydraulischen oder pneumatischen Verbrauchers in eine radiale Bewegung des zweiten Schließelements umgewandelt. Hierzu ist ein konisch ausgebildeter Betätigungskegel an der zum zweiten Schließelement zugewandten Seite lösbar mit der Betätigungsstange verbunden. Um diesen konischen Betätigungskegel sind hohlförmige Segmente mit Dichtflächen konzentrisch angeordnet, die sich bei einer Axialbewegung der Betätigungsstange radial nach außen bewegen und damit eine der Anzahl der Segmente entsprechende Anzahl von Verschlussöffnungen verschließt. Die Rückstellkraft des Koppelelements wird beim Entkuppeln des hydraulischen oder pneumatischen Verbrauchers durch eine zwischen einem freien Ende des Betätigungskegels und des Gehäuses vorgespannten Rückstellfeder sichergestellt, deren Federkraft in Richtung des axialen Anschlusses wirkt.

Die Segmente des zweiten Schließelements wirken unabhängig voneinander auf ihre jeweiligen Verschlussöffnungen, stehen jedoch über eine oder mehrere radial wirkende Ringfedern in Wirkverbindung miteinander. Diese Ringfedern sichern einerseits die Ausrichtung der Segmente zueinander und andererseits ein Rückführen der Segmente nach einer Entkopplung eines hydraulischen oder pneumatischen Verbrauchers von der Steckkupplung in ihre ursprüngliche Position. Die Federkraft der Ringfedern wirkt dabei radial in Richtung des Betätigungskegels.

Nach der Konzeption der Erfindung verschließt das erste Schließelement einen Strömungspfad in axialer Ausrichtung der Steckkupplung und das zweite Schließelement einen weiteren Strömungspfad in radialer Ausrichtung der Steckkupplung. Zwangsläufig wird ein hydraulischer Verbraucher an ein axiales Ende der Steckkupplung und ein weiterer Verbraucher an einen Muffenanschluss orthogonal zu diesem radial an die Steckkupplung angeschlossen. Der radiale Anschluss bedingt eine Strömungsrichtungsumlenkung um 90°, die durch ein kugelförmiges radial ausgebildetes Reservoir an einem beliebigen Streckenabschnitt der Steckkupplung sichergestellt wird.

Das Reservoir weist über einer Umfangslinie gleichmäßig verteilte Verschlussöffnungen auf, die einen zylinderförmigen Hohlraum des Reservoirs mit einem Ringspalt des Reservoirs zum Durchtritt des Fluids verbinden. In diese Verschlussöffnungen greifen im Schließzustand die als Pyramidenstumpf ausgebildeten Dichtflächen des aus Segmenten aufgebauten zweiten Schließelements sitzdicht ein.

Der Weg des Erfindungsgedankens wird auch dann nicht verlassen, wenn das erste und das zweite Schließelement mittelbar oder unmittelbar in Wirkverbindung miteinander stehen. Diese Wirkverbindung wird dadurch erzielt, indem an dem freien Ende der Betätigungsstange ein teller- oder kappenförmiger Körper angeordnet ist, der während der axialen Bewegung der Betätigungsstange beim Ankuppeln eines Verbrauchers an die Steckkupplung das erste Schließelement kontaktiert und es dabei axial in Richtung des Reservoirs mitführt.

Diese erfindungsgemäße Steckkupplung kann neben dem bevorzugten Anwendungsfeld, dem parallelen Ankuppeln von Verbrauchern an ein Steuerventil eines Arbeitsgerätes, auch für andere hydraulische oder pneumatische Leitungen, wie z. B. Bremsleitungen oder Hochdruckleitungen, eingesetzt werden.

Die signifikanten und als neu zu beurteilenden Merkmale und Vorteile der Erfindung sind im Wesentlichen:
■ konstruktiv einfacher Aufbau der Steckkupplung und damit preisgünstig zu fertigen,
■ wechselseitig steuerbare Schließelemente, die einerseits axial und andererseits radial die Strömungspfade für ein Fluid freigeben,
■ ohne Hilfsenergie steuerbar und damit weniger störanfällig,
■ Erzielung einer Sitzdichtheit durch ventilartige Ausbildung der Schließelemente,
■ Nutzung der Steckkupplung als konventionelles Kuppelorgan als auch zum Anschluss eines alternativen hydraulischen oder pneumatischen Verbrauchers und
■ für pneumatische und hydraulische Systeme gleichermaßen geeignet.

Nachstehend wird die Erfindung beispielhaft anhand genannter Zeichnungen näher erläutert.

Dabei zeigen:
- Fig. 1:: perspektivische Gesamtdarstellung der Steckkupplung,
- Fig. 2:: Detaildarstellung des radial wirkenden Schließelements und
- Fig. 3:: Anschluss der Steckkupplung an ein Steuerventil

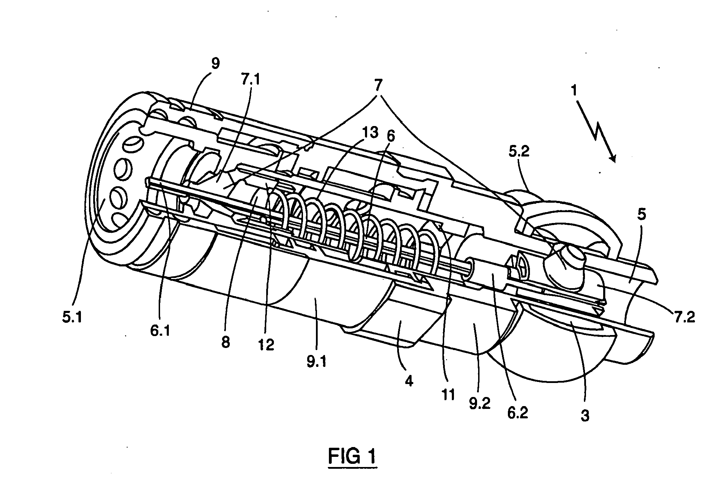

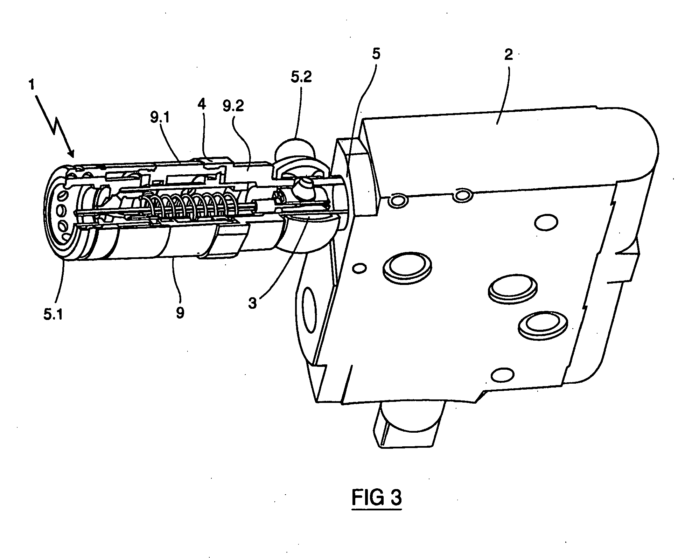

Fig. 1 illustriert die perspektivische Gesamtdarstellung der Steckkupplung 1 in der bevorzugten Ausgestaltungsvariante mit einem als Spiralfeder ausgebildeten Federelement 13. Das zylinderförmige Gehäuse 9 weist einen ersten Gehäuseabschnitt 9.1 und einen mit diesem mittels einer Verschraubung 4 lösbar verbundenen zweiten Gehäuseabschnitt 9.2 auf Der zweite Gehäuseabschnitt 9.2 ist bis auf den Bereich des Reservoirs 3 als Hohlzylinder ausgeformt. Am ersten Gehäuseabschnitt 9.1 ist axial in Richtung der Längserstreckung der Steckkupplung 1 der muffenartige Anschluss 5.1 und orthogonal zu diesem Anschluss 5.1 der Anschluss 5.2 im Bereich des Reservoirs 3 angeordnet. Über den Anschluss 5 erfolgt der Fluidzulauf vom in der Fig. 3 dargestellten Steuerventil 2. Das Schließelement 7.1 mit ausgebildetem Durchtritt ist mit dem Federelement 13 lösbar verbunden und verschließt durch die Federkraftwirkung dieses Federelements 13 den ersten Anschluss 5.1. Dieses Federelement 13 ist zwischen den Anschlägen 11, 12 vorgespannt. Zwischen einem Ende der Spiralfeder und dem ersten Schließelement 7.1 ist eine Haltescheibe 8 arretiert, die bei Druckkraftbeaufschlagung der Spiralfeder ein Ineinanderschieben des ersten Verschlusselements 7.1 in die Spiralfeder verhindert. Eine weitere Aufgabe dieser Haltescheibe 8 besteht darin, im entspannten Zustand der Spiralfeder eine großflächige Auflagefläche zu dem Anschlag 12 zu sichern.

Das zweite Schließelement 7.2 steht in Wirkverbindung mit einem Koppelelement 6, aufweisend eine Betätigungsstange 6.1, einen mit dieser lösbar verbundenen konisch ausgebildeten Betätigungskegel 6.2 und eine nichtdargestellte Rückstellfeder. Der Betätigungskegel 6.2 ist hierbei an dem zum Reservoir 6 weisenden axialen Ende der Betätigungsstange 6.1 angeordnet, während im Bereich des freien axialen Endes der Betätigungsstange 6.1 diese in dem Durchtritt des ersten Schließelements 7.1 geführt bzw. gelagert ist.

Den Betätigungskegel 6.2 radial umfassend ist das zweite Schließelement 7.2 im Reservoir 3 zentral angeordnet. Das Schließelement 7.2 ist aus mehreren identischen hohlförmigen Segmenten 10 aufgebaut, die an ihrer Außenseite pyramidenstumpfförmige Dichtflächen 10.1 aufweisen. Das Reservoir 3 ist derart kugelförmig ausgebildet, dass über einer Umfangslinie die den Dichtflächen 10.1 komplementären Verschlussöffnungen gleichverteilt angeordnet sind.

Die Wirkungsweise der Steckkupplung 1 ist Folgende:
Mit der Verbindung der Steckkupplung 1 an ein Steuerventil 2 eines Fahrzeugs und der Freigabe des Fluidstroms durch das Bedienpersonal ist grundsätzlich die Funktionsweise gewährleistet. Im dargestellten Beispiel ist das erste Schließelement 7.1 geschlossen und damit der Durchgangspfad zum Anschluss 5.1 drucklos. Das Federelement 13 und die nichtdargestellte Rückstellfeder sind dekomprimiert und ausschließlich durch ihre Vorspannungen zwischen den dargestellten Anschlägen 11, 12 gehaltert. Der Konus des Betätigungskegels 6.2 weist in diesem Schaltzustand den größtmöglichen Abstand zum zweiten Schließelement 7.2 auf, so dass die Segmente 10 radial nach innen zur gedachten Längsachse der Steckkupplung 1 gerichtet sind. Die pyramidenstumpfförmigen Dichtflächen 10.1 der Segmente 10 befinden sich außerhalb ihrer komplementären Verschlussöffnungen, die über einer Umfangslinie des Reservoirs 3 angeordnet sind, so dass das Fluid über einen partiell ausgebildeten Ringspalt im Reservoir 3 dem zweiten Anschluss 5.2 zuströmt. Ein mit diesem Anschluss 5.2 gekoppelter Verbraucher kann mit einem Druck beaufschlagten Fluid versorgt werden. Das strömende Fluid wird folglich einer Strömungsrichtungsumlenkung um 90° unterzogen.
Mit dem Ankuppeln eines Verbrauchers über den Anschluss 5.1 wird in konventioneller Weise der nichtdargestellte Gerätestecker in den muffenartigen Anschluss 5.1 eingeführt. Infolgedessen wird die Betätigungsstange 6.1 axial in Richtung des Reservoirs 3 bewegt, wobei die Betätigungsstange 6.1 im Durchtritt des ersten Schließelements 7.1 geführt ist. Die nichtdargestellte Rückstellfeder wird auf Grund der Koppelwirkung mit der Betätigungsstange 6.1 durch diese komprimiert.

Die konische Ausbildung des Betätigungskegels 6.2 veranlasst eine radiale Bewegung der Segmente 10 nach außen. Dabei bewegen sich die Dichtflächen 10.1 in ihre komplementären Verschlussöffnungen und verschließen sitzdicht den Ringspalt. Der Strömungspfad zum Anschluss 5.2 ist verschlossen und drucklos.

Im weiteren Verlauf des Ankuppelns kontaktieren Teile des Gerätesteckers das erste Schließelement 7.1 und bewegen es entgegen der Federkraftwirkung des als Spiralfeder ausgebildeten Federelements 13 axial in Richtung des Reservoirs 3. Dabei öffnet sich der Durchgangspfad zur axialen Durchströmung.

Die Segmente 10 des zweiten Schließelements 7.2 werden auf Grund ihrer hohlförmigen Ausbildung in Richtung ihrer Längsachse durchströmt und gegebenenfalls auch umströmt. Das Fluid strömt nun in axialer Richtung dem Anschluss 5.1 zu und der Anschluss 5.2 ist vollständig geschlossen. Das Öffnen und Verschließen der einzelnen Pfade zu den Anschlüssen 5.1, 5.2 erfolgt zur Sicherstellung eines ausschließlich wechselseitigen Betriebs, wie zuvor beschrieben, zeitversetzt bzw. mit positiver Schaltüberdeckung.

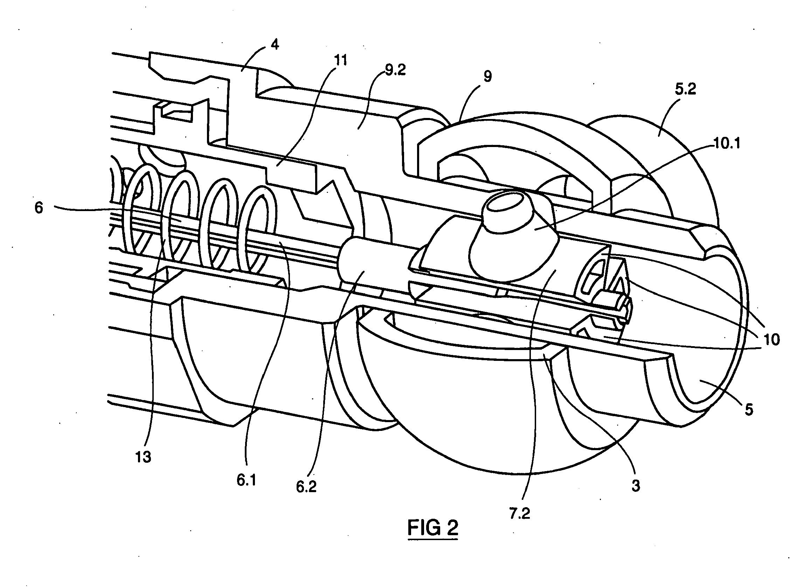

Fig. 2 zeigt die Detaildarstellung des radial wirkenden zweiten Schließelements 7.2 mit dem an dem Reservoir 3 ausgebildeten Anschluss 5.2. Das kugelförmige Reservoir 3 dient hierbei in Abhängigkeit eines Schaltzustands zur Strömungsrichtungumlenkung für das Fluid oder zur nahezu ungehinderten Durchleitung des Fluids. Der nichtdargestellte erste Gehäuseabschnitt 9.1 ist mittels einer Verschraubung 4 lösbar mit dem zweiten Gehäuseabschnitt 9.2 verbunden. Der zweite Gehäuseabschnitt 9.2 ist, außer im Bereich des Reservoirs 3, zylinderförmig ausgebildet. Das Reservoir 3 weist über einer Umfangslinie gleichmäßig verteilt Verschlussöffnungen, die den zylinderförmigen Hohlraum des Reservoirs 3 mit dem Ringspalt des Reservoirs 3 zum Durchtritt des Fluids verbinden, auf Im Reservoir 3 ist das radial wirkende zweite Schließelement 7.2 mit den Segmenten 10 zentrisch angeordnet. Das Schließelement 7.2 weist erfindungsgemäß mehrere identische Segmente 10 auf, die radial um einen Betätigungskegel 6.2 gleichmäßig beabstandet angeordnet sind. Über dem Umfang der Segmente 10 ist mindestens eine nichtdargestellte Ringfeder angeordnet, die in Richtung der gedachten gemeinsamen Achse der Segmente 10 wirkt und damit eine radial wirkende Vorspannung der einzelnen Segmente 10 sichert. Während eines Schaltzustandes werden die Dichtflächen 10.1 der Segmente 10 in die besagten Verschlussöffnungen des Reservoirs 3 radial bewegt. Ein axiales Verschieben der Segmente 10 in Richtung der Längsachse der Steckkupplung 1 wird durch die nichtdargestellten Sicherungselemente unterbunden. Demnach hat jedes Segment 10 nur einen Freiheitsgrad hinsichtlich seiner möglichen Bewegungsrichtung, nämlich radial nach außen.

Um den Strömungswiderstand der Segmente 10 zu minimieren, sind diese in Richtung ihrer Längserstreckung hohlförmig und damit durchströmbar ausgebildet. Die Dicke der Wandung jedes einzelnen Segments 10 ist in Abhängigkeit der maximal auftretenden Betriebsdrücke im Speise- bzw. Verbraucherkreis bis zu 250 bar ausreichend bemessen.

Die Betätigungsstange 6.1 wird von einem als Spiralfeder ausgebildeten Federelement 13 umfasst, wobei diese Spiralfeder an dem nur angedeuteten Anschlag 11 gehalten ist. An dem zum Reservoir 6 weisenden axialen Ende der Betätigungsstange 6.1 ist der konisch ausgebildete Betätigungskegel 6.2 lösbar mit dieser verbunden. Dies hat den Vorteil, dass die Stellzeit des ventilartigen zweiten Schließelements 7.2 durch Verwendung von Konussen mit unterschiedlicher Steigung variiert werden kann. Nicht dargestellt ist die Rückstellfeder, die zwischen einem freien Ende des Betätigungskegels 6.2 und dem Gehäuse verspannt ist.

Fig. 3 illustriert den Anschluss der erfindungsgemäßen Steckkupplung 1 an ein hydraulisches oder pneumatisches Steuerventil 2. Das Steuerventil 2 ist üblicherweise am Heck eines Fahrzeugs angeordnet. Die steuerbaren Anschlüsse 5.1 und 5.2 sind nicht an einen Verbraucher angeschlossen, währenddessen der Anschluss 5 lösbar mit einem Steuerventil 2 verbunden ist. Dieses Steuerventil 2 wird üblicherweise mechanisch oder elektrohydraulisch vom Bedienpersonal ferngesteuert, um den für die jeweilige Aufgabenstellung notwendigen Volumenstrom des Fluids und dessen Druck bereitzustellen.

Es ist ersichtlich, dass das radial ausgebildete Reservoir 3 der Steckkupplung 1 unmittelbar im Bereich des Steuerventils 2, also zu der Fahrzeug zugewandten Seite, angeordnet ist. Das Gehäuse 9 der Steckkupplung 1 ist zweiteilig aufgebaut, nämlich aus einem ersten Gehäuseabschnitt 9.1 und einem zweiten Gehäuseabschnitt 9.2, wobei diese Gehäuseteile mittels einer Verschraubung 4 miteinander gefügt sind. Die Anschlüsse 5.12 und 5.2 sind muffenartig ausgebildet und gestatten daher einen problemlosen, sicheren und Zeit sparenden Anschluss eines Verbrauchers an die Steckkupplung 1.

### LISTE DER BEZUGSZEICHEN

- 1: Steckkupplung
- 2: Steuerventil
- 3: Reservoir
- 4: Verschraubung
- 5: Anschluss
- 5.1: erster Anschluss
- 5.2: zweiter Anschluss
- 6: Koppelelement
- 6.1: Betätigungsstange
- 6.2: Betätigungskegel
- 7: Verschlusselement
- 7.1: erstes Schließelement
- 7.2: zweites Schließelement
- 8: Haltescheibe
- 9: Gehäuse
- 9.1: 1. Gehäuseabschnitt
- 9.2: 2. Gehäuseabschnitt
- 10: Segmente
- 10.1: Dichtflächen
- 11: Anschlag
- 12: Anschlag
- 13: Federelement

## Patentansprüche

1. Steckkupplung (1) für ein hydraulisches oder pneumatisches System, das mindestens einen ersten und einen zweiten gesteuerten Anschluss (5.1, 5.2) und ein Verschlusselement (7) umfasst, das ein erstes Schließelement (7.1) und ein zweites Schließelement (7.2) aufweist, wobei die Schließelemente (7.1, 7.2) ohne Hilfsenergie derart steuerbar ausgebildet sind, dass wechselseitig nur ein Strömungspfad für ein Fluid zum ersten Anschluss (5.1) oder zum zweiten Anschluss (5.2) freigegeben ist, **dadurch gekennzeichnet, dass** das erste Schließelement (7.1) als einteiliger Verschlusskegel mit einem Durchtritt ausgebildet ist und das zweite Schließelement (7.2) mehrere über einer Umfangslinie verteilte Segmente (10) aufweist, wobei das erste Schließelement (7.1) in axialer Ausrichtung den ersten Anschluss (5.1) und das zweite Schließelement (7.2) den zweiten Anschluss (5.2) in radialer Ausrichtung der Steckkupplung (1) verschließt.

2. Steckkupplung (1) nach Anspruch 1, **dadurch gekennzeichnet, dass** ein zwischen zwei Federendstellungen axial bewegliches Koppelelement (6) vorgesehen ist, das eine im Durchtritt des ersten Schließelements (7.1) geführte Betätigungsstange (6.1), einen mit dieser Betätigungsstange (6.1) lösbar verbundenen Betätigungskegel (6.2) und eine Rückstellfeder umfasst und in Wirkverbindung mit dem zweiten Schließelement (7.2) steht.

3. Steckkupplung (1) nach Anspruch 2, **dadurch gekennzeichnet, dass** die Rückstellfeder zwischen einem freien axialen Ende des Betätigungskegels (6.2) und dem Gehäuse (9) vorgespannt angeordnet ist, wobei die Federkraft in Richtung des ersten Anschlusses (5.1) wirkt.

4. Steckkupplung (1) nach einem der Ansprüche 1 bis 3, **dadurch gekennzeichnet, dass** die Segmente (10) des zweiten Schließelements (7.2) pyramidenstumpfförmige Dichtflächen (10.1) aufweisen.

5. Steckkupplung (1) nach einem der Ansprüche 1 bis 4, **dadurch gekennzeichnet, dass** die Segmente (10) des zweiten Schließelements (7.2) mittels radial wirkender Ringfedern miteinander in Wirkverbindung stehen, wobei die Federkraft der Ringfedern in Richtung des Betätigungskegels (6.2) wirkt.

6. Steckkupplung (1) nach einem der Ansprüche 2 bis 5, **dadurch gekennzeichnet, dass** der Betätigungskegel (6.2) konisch ausgebildet ist, wodurch eine axiale Bewegung des Koppelelements (6) in eine radiale Bewegung der Segmente (10) mit ausgebildeten Dichtflächen (10.1) umgewandelt wird.

7. Steckkupplung (1) nach einem der Ansprüche 1 bis 6, **dadurch gekennzeichnet, dass** die Steckkupplung (1) ein radial ausgebildetes Reservoir (3) aufweist, an dem der Anschluss (5.2) orthogonal zur Längsausrichtung der Steckkupplung (1) ausgebildet ist.

8. Steckkupplung (1) nach Anspruch 7, **dadurch gekennzeichnet, dass** das Reservoir (3) über einer Umfangslinie gleichmäßig verteilte Verschlussöffnungen aufweist, die einen zylinderförmigen Hohlraum des Reservoirs (3) mit einem Ringspalt des Reservoirs (3) zum Durchtritt des Fluids verbinden.

## Claims

1. Plug-in coupling (1) for a hydraulic or pneumatic system comprising at least one or two controlled connections (5.1, 5.2) and a closing element (7) consisting of a first closing element (7.1) and a second closing element (7.2). The closing elements (7.1, 7.2) are controlled without auxiliary energy in such a way that alternately only a flow path for a fluid to the first connection (5.1) or the second connection (5.1) is enabled, **characterized in that** the first closing element (7.1) is designed as a one-piece sealing cone with one passage, and the second closing element (7.2) comprises several segments (10) distributed over a peripheral line, wherein the first closing element (7.1) closes the first connection (5.1) in axial alignment with the plug-in coupling (1), and the second closing element (7.2) closes the second connection (5.2) in radial alignment with the plug-in coupling (1).

2. Plug-in coupling (1) according to claim 1, **characterized in that** an axially moveable coupling element (6) between two spring end positions is provided that consists of an actuator rod (6.1) inside the passage of the first closing element (7.1), one actuator cone (6.2) detachably connected to the actuator rod (6.1), and a return spring, and is functionally connected to the second closing element (7.2).

3. Plug-in coupling (1) according to claim 2, **characterized in that** the return spring is arranged pre-loaded between a free axial end of the actuator cone (6.2) and the housing (9), and the spring force is directed toward the first connection (5.1).

4. Plug-in coupling (1) according to any of the claims 1 to 3, **characterized in that** the segments (10) of the second closing element (7.2) have sealing surfaces (10.1) in the shape of a pyramid frustum.

5. Plug-in coupling (1) according to any of the claims 1 to 4, **characterized in that** the segments (10) of the second closing element (7.2) are functionally connected with each other by means of radially acting spring collars with the spring force of the spring collars directed toward the actuator cone (6.2).

6. Plug-in coupling (1) according to any of the claims 2 to 5, **characterized in that** the actuator cone (6.2) is cone shaped as a result of which an axial motion of the coupling element (6) is converted into a radial motion of the segments (10) with sealing surfaces (10.1).

7. Plug-in coupling (1) according to any of the claims 1 to 6, **characterized in that** the plug-in coupling (1) comprises a radially designed reservoir (3) with the connector (5.2) orthogonally arranged to the long side of the plug-in coupling (1).

8. Plug-in coupling (1) according to claim 7, **characterized in that** the reservoir (3) has openings evenly distributed over a peripheral line that connect a cylindrically shaped hollow of the reservoir (3) with a circular orifice of the reservoir (3) to allow passage of the fluid.

## Revendications

1. Raccord à emmancher (1) pour un système hydraulique ou pneumatique, qui comprend au moins un premier et un second connecteur commandés (5.1, 5.2) et un organe obturateur (7), qui comporte un premier élément d'obturation (7.1) et un second élément d'obturation (7.2), dans lequel les éléments d'obturation (7.1, 7.2) sont construits en pouvant être commandés sans énergie auxiliaire de telle sorte que, respectivement, une seule trajectoire d'écoulement pour un fluide vers le premier connecteur (5.1) ou vers le second connecteur (5.2) est dégagée, **caractérisé en ce que** le premier élément d'obturation (7.1) est construit sous forme d'un cône d'obturation monobloc comportant un passage et le second élément d'obturation (7.2) comporte plusieurs segments (10) répartis sur une ligne périphérique, moyennant quoi le premier élément d'obturation (7.1) obture le premier connecteur (5.1) dans le sens axial et le second élément d'obturation (7.2) obture le second connecteur (5.2) dans le sens radial du raccord à emmancher (1).

2. Raccord à emmancher (1) selon la revendication 1, **caractérisé en ce qu'**il est prévu un organe d'accouplement (6) mobile axialement entre deux positions finales de ressort, qui comprend une tige d'actionnement (6.1) guidée dans le passage du premier élément d'obturation (7.1), un cône d'actionnement (6.2) relié de manière mobile avec cette tige d'actionnement (6.1) et un ressort de rappel et est en liaison active avec le second élément d'obturation (7.2).

3. Raccord à emmancher (1) selon la revendication 2, **caractérisé en ce que** le ressort de rappel est disposé en précontrainte entre une extrémité axiale libre du cône d'actionnement (6.2) et le bâti (9), moyennant quoi la force de ressort s'exerce dans le sens du premier connecteur (5.1).

4. Raccord à emmancher (1) selon l'une quelconque des revendications 1 à 3, **caractérisé en ce que** les segments (10) du second élément d'obturation (7.2) possèdent des surfaces d'étanchéité (10.1) en forme de pyramide tronquée.

5. Raccord à emmancher (1) selon l'une quelconque des revendications 1 à 4, **caractérisé en ce que** les segments (10) du second élément d'obturation (7.2) sont en liaison active l'un avec l'autre au moyen de ressorts annulaires agissant radialement, moyennant quoi la force de ressort des ressorts annulaires est exercée dans le sens du cône d'actionnement (6.2).

6. Raccord à emmancher (1) selon l'une quelconque des revendications 2 à 5, **caractérisé en ce que** le cône d'actionnement (6.2) a une forme conique, ce par quoi un mouvement axial de l'organe d'accouplement (6) est converti en un mouvement radial des segments (10) avec les surfaces d'étanchéité constituées (10.1).

7. Raccord à emmancher (1) selon l'une quelconque des revendications 1 à 6, **caractérisé en ce que** le raccord à emmancher (1) comprend un réservoir construit radialement (3), de façon attenante auquel le connecteur (5.2) est construit orthogonalement au sens longitudinal du raccord à emmancher (1).

8. Raccord à emmancher (1) selon la revendication 7, **caractérisé en ce que** le réservoir (3) comprend des orifices d'obturation répartis régulièrement sur une ligne périphérique, qui relient un creux cylindrique du réservoir (3) à un interstice annulaire du réservoir (3) pour le passage du fluide.
